(19) **Europäisches Patentamt**
**European Patent Office**
**Office européen des brevets**

(11) **EP 4 343 556 B1**

(12) **EUROPEAN PATENT SPECIFICATION**

(45) Date of publication and mention
of the grant of the patent:
**06.08.2025 Bulletin 2025/32**

(21) Application number: **23191682.6**

(22) Date of filing: **16.08.2023**

(51) International Patent Classification (IPC):
**G06F 11/34** (2006.01)    **G06N 3/0985** (2023.01)
**G06N 5/01** (2023.01)    **G06N 20/20** (2019.01)
**G06F 3/044** (2006.01)

(52) Cooperative Patent Classification (CPC):
**G06N 3/0985; G06F 11/3452;** G06N 3/044;
G06N 3/0464; G06N 3/096; G06N 5/01; G06N 20/20

(54) **METHODS AND SYSTEMS FOR ESTIMATING AND EVALUATING MODEL PERFORMANCE IN PRODUCTION**

VERFAHREN UND SYSTEME ZUR SCHÄTZUNG UND BEWERTUNG DER MODELLLEISTUNG IN DER PRODUKTION

PROCÉDÉS ET SYSTÈMES D'ESTIMATION ET D'ÉVALUATION DE PERFORMANCE DE MODÈLE DANS LA PRODUCTION

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **22.09.2022 IN 202221054354**

(43) Date of publication of application:
**27.03.2024 Bulletin 2024/13**

(73) Proprietor: **Tata Consultancy Services Limited Maharashtra (IN)**

(72) Inventors:
• **BOSE, Nirban**
**Bangalore, Karnataka 560066 (IN)**
• **KALELE, Amit**
**Pune, Maharashtra 411057 (IN)**
• **ARUNKUMAR, Jayashree**
**Chennai, Tamil Nadu 600113 (IN)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
**US-A1- 2021 035 021**

• **LI BEIBIN ET AL: "Warper: Efficiently Adapting Learned Cardinality Estimators to Data and Workload Drifts", PROCEEDINGS OF THE 26TH ACM INTERNATIONAL CONFERENCE ON HYBRID SYSTEMS: COMPUTATION AND CONTROL, ACMPUB27, NEW YORK, NY, USA, 10 June 2022 (2022-06-10), pages 1920 - 1933, XP059072865, ISBN: 979-8-4007-0033-0, DOI: 10.1145/3514221.3526179**
• **DAVID NIGENDA ET AL: "Amazon SageMaker Model Monitor: A System for Real-Time Insights into Deployed Machine Learning Models", ARXIV.ORG, CORNELL UNIVERSITY LIBRARY, 201 OLIN LIBRARY CORNELL UNIVERSITY ITHACA, NY 14853, 5 August 2022 (2022-08-05), XP091288256**

EP 4 343 556 B1

## Description

### CROSS-REFERENCE TO RELATED APPLICATIONS AND PRIORITY

The present application claims priority from Indian patent application, Application No. 202221054354, filed in India on September 22, 2022.

### TECHNICAL FIELD

The disclosure herein generally relates to the field of artificial intelligence, and, more particularly, to methods and systems for estimating and evaluating model performance in production.

### BACKGROUND

With evolution of technology, there is a surge in use of artificial intelligence (AI) in varying applications of multiple industries. Artificial intelligence applications are enabled to solve problems by developing and deploying machine learning models. An AI/ML model is often sensitive to changes in underlying data distribution or underlying process. When the ML model is deployed in production, perturbations can affect performance of ML model. This might further affect stability of the ML model and retraining the ML model becomes inevitable in several scenarios. Thus, the performance of ML models in production can be significantly impacted if the underlying distribution of the data or the underlying process changes. This in turn can significantly impact business decisions. Thus, performance monitoring of ML models in production becomes necessary. Conventional methods for ML model performance monitoring involve estimating drift in new production data with respect to some reference data. However, the conventional methods fail to monitor the ML model performance in varying scenarios. Document US 2021/035021 A1 discloses a method of monitoring performance of a machine learning model externally to the machine learning model, comprising: monitoring data elements being fed into a machine learning model trained on a training dataset of historical training data elements, wherein the data elements are each associated with a respective time after the time associated with the training dataset, analyzing the data elements for identifying shift(s) between at least two subsets of the data elements, computing according to the shift(s), measurement(s) denoting an expected effect on output of the model, and detecting a misclassification event by the model when the measurement(s) exceeds a threshold of the model, wherein the monitoring, the analyzing, the computing, and the detecting are performed externally to the model, without accessing at least one of: data stored within the machine learning model, an implementation of the model, and data structures of the model. (Abstract). Document LI BEIBIN ET AL: "Warper: Efficiently Adapting Learned Cardinality Estimators to Data and Workload Drifts" discloses a system Warper that accelerates model adaptation to drifts; Warper generates additional queries when limited examples are available from the new workload and carefully picks which queries to use to update the CE model. We show that Warper can be used to adapt different CE models including ones that support queries over single tables and join expressions. Experiments with different drifts suggest that Warper has a small computational cost and adapts much faster compared to state-of-the-art solutions. We also show that faster model adaptation improves query performance by shortening the period for which imperfect query plans are picked by a query optimizer due to incorrect cardinality estimates. (Abstract). Document DAVID NIGENDA ET AL: "Amazon SageMaker Model Monitor: A System for Real-Time Insights into Deployed Machine Learning Models" discloses that system automatically detects data, concept, bias, and feature attribution drift in models in real-time and provides alerts so that model owners can take corrective actions and thereby maintain high quality models. The key requirements obtained from customers, system design and architecture, and methodology for detecting different types of drift are described. Further, quantitative evaluations followed by use cases, insights, and lessons learned from more than two years of production deployment are provided. (Abstract)

### SUMMARY

Embodiments of the present disclosure present technological improvements as solutions to one or more of the above-mentioned technical problems recognized by the inventors in conventional systems. The invention is disclosed in appended set of claims.

In accordance with an embodiment of the present disclosure, wherein the model under evaluation $M$ is an artificial intelligence based model or a machine learning based model.

In accordance with an embodiment of the present disclosure, wherein the predefined threshold is configurable.

In accordance with an embodiment of the present disclosure, wherein the one or more model performance metrics comprises of an accuracy, an F1 score, and an average precession.

In accordance with an embodiment of the present disclosure, wherein when the spread in the drift distribution of the plurality of test data $D_{test}$ is below the predefined threshold is further configured to: perturb, the second dataset to obtain a perturbed dataset using noise perturbations, wherein the noise perturbations are sampled from gaussian, uniform or poisson distributions and linearly superposed on top of a plurality of true samples of the second dataset; determine, a second set of model parameters for a plurality of data samples comprised in each data bucket from a plurality of data buckets of the perturbed dataset with respect to the first dataset, wherein the second set of model parameters include a fitted drift mean, the model uncertainty, and the one or more model performance metrics; construct, a second look up table by identifying a correlation among each of the second set of model parameters; compute, a fitted drift mean distribution of the plurality of incoming test data received from the user; identify, a drift value cell from the second look up table corresponding to the computed fitted drift mean distribution of the plurality of incoming test data, wherein the drift value cell is identified based on (i) a minimum deviation between the computed fitted drift mean distribution of the plurality of incoming test data and a plurality of pre-stored fitted drift mean values in the second look up table and (ii) a minimum value of model uncertainty; and estimate, at least one of the one or more model performance metrics corresponding to the identified drift value cell from the second look up table to evaluate an optimal performance of the model under evaluation $M$.

In accordance with an embodiment of the present disclosure, wherein the optimal performance of the model under evaluation $M$ is evaluated when the model under evaluation $M$ is deployed in production.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates an exemplary system for estimating and evaluating model performance in production, in accordance with an embodiment of the present disclosure.
FIG. 2, with reference to FIGS. 1, depicts an exemplary flow chart illustrating a method for estimating and evaluating model performance in production, in accordance with an embodiment of the present disclosure.
FIGS. 3A and 3B depict graphical representations to illustrate variation of error bound with model confidence for different sample sizes, in accordance with an embodiment of the present disclosure.
FIGS. 4A and 4B depict plots illustrating correlation between drift, model performance and model uncertainty for two different type of sample data, in accordance with an embodiment of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered as exemplary only, with the true scope being indicated by the following embodiments described herein.

Artificial intelligence is gaining momentum and is being used in many industries for multiple applications. Artificial intelligence applications are enabled to solve problems by developing and deploying machine learning models. After model assurance stage, when an ML model is deployed in production, its performance decays over a period of time due to varying factors. One of the most common factors for this shift in the distributions of the input attribute space or change in the underlying process that generates the outputs, is a process known as drift. This drift in the data impacts ML model sustainability by inhibiting a knowledge of true labels and also affecting ML model uncertainty. This in turn can significantly impact ML model's decision making thereby affecting business decision. Thus, it is important to monitor the deployed model at the production stage. The most common strategy that arises out of production monitoring is retraining the ML model as soon as there is a significant degradation in the ML model performance. But retraining is computationally and resourcefully extensive. Further, few conventional methods for ML model performance monitoring involve estimating drift in new production data with respect to some reference data. However, the conventional methods fail to monitor the ML model performance in varying scenarios. One such scenario is impact of the drift in absence of ground truths on the ML model performance. Two relevant quantities of interest for ML model performance monitoring are the drift and the model uncertainty. These two quantities are usually treated on a different footing by data scientists and AI/ML practitioners. The present disclosure tries to treat the drift and the model uncertainty on same footing and investigate their correlation with the model performance. In the present disclosure, the correlation between these quantities is exploited and model performance is computed for a given drift thus avoiding the retraining part unless necessary.

In other words, the performance of a machine learning (ML) model in production is heavily dependent on underlying distribution of data or underlying process generating labels from attributes. Any change in either one or both impacts the ML model performance heavily and inhibits knowledge of true labels. This in turn affects ML model uncertainty. Thus, performance monitoring of ML models in production becomes necessary.

Embodiments of the present disclosure provide methods and systems for estimating and evaluating model performance in production. The method of the present disclosure estimates operating model accuracy at production stage by constructing the correlations between the model accuracy, model uncertainty and deviation of the distributions. More Specifically, the present disclosure describes the following:

1. An automated framework for constructing the drift, model uncertainty, and model performance correlation from a user supplied test data and model.
2. An automated algorithm for consuming the user supplied test data having a different underlying distribution and evaluating the model performance from the correlation table and raising triggers if the model performance is significantly off.
3. A generic mathematical framework and empirical approach to estimate variation of upper bound on deviation between predicted and ground truth with model confidence.

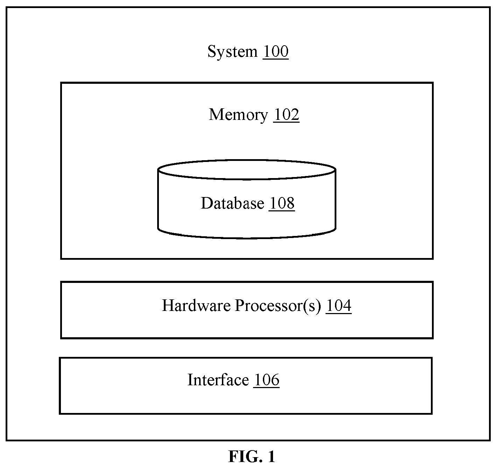

Referring now to the drawings, and more particularly to FIGS. 1 through 4B, where similar reference characters denote corresponding features consistently throughout the figures, there are shown preferred embodiments and these embodiments are described in the context of the following exemplary system and/or method.

FIG. 1 illustrates an exemplary system 100 for estimating and evaluating model performance in production, in accordance with an embodiment of the present disclosure. In an embodiment, the system 100 includes one or more hardware processors 104, communication interface device(s) or input/output (I/O) interface(s) 106 (also referred as interface(s)), and one or more data storage devices or memory 102 operatively coupled to the one or more hardware processors 104. The one or more processors 104 may be one or more software processing components and/or hardware processors. In an embodiment, the hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is/are configured to fetch and execute computer-readable instructions stored in the memory. In an embodiment, the system 100 can be implemented in a variety of computing systems, such as laptop computers, notebooks, hand-held devices, workstations, mainframe computers, servers, a network cloud and the like.

The I/O interface device(s) 106 can include a variety of software and hardware interfaces, for example, a web interface, a graphical user interface, and the like and can facilitate multiple communications within a wide variety of networks N/W 5 and protocol types, including wired networks, for example, LAN, cable, etc., and wireless networks, such as WLAN, cellular, or satellite. In an embodiment, the I/O interface device(s) can include one or more ports for connecting a number of devices to one another or to another server.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, a database 108 is comprised in the memory 102, wherein the database 108 comprises a plurality of test data received from user, one or more AI/ML models, one or more look up tables, one or more model parameters, incoming test data.

The database 108 further comprises one or more modules which when invoked and executed perform corresponding steps/actions as per the requirement by the system 100 to perform the methodologies described herein. The memory 102 further comprises (or may further comprise) information pertaining to input(s)/output(s) of each step performed by the systems and methods of the present disclosure. In other words, input(s) fed at each step and output(s) generated at each step are comprised in the memory 102 and can be utilized in further processing and analysis.

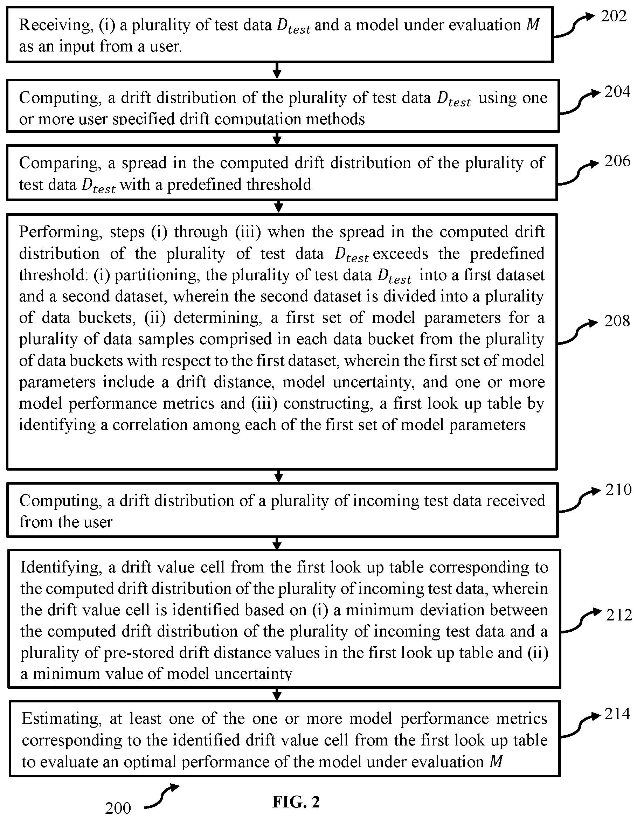

FIG. 2, with reference to FIG. 1, depicts an exemplary flow chart illustrating a method 200 for estimating and evaluating model performance in production, using the system 100 of FIG. 1, in accordance with an embodiment of the present disclosure.

Referring to FIG. 2, in an embodiment, the system(s) 100 comprises one or more data storage devices or the memory 102 operatively coupled to the one or more hardware processors 104 and is configured to store instructions for execution of steps of the method by the one or more processors 104. The steps of a method 200 in FIG. 2 of the present disclosure will now be explained with reference to components of the system 100 of FIG. 1, and the flow diagram as depicted in FIG. 2. The method of the present disclosure comprises of two phases. A first phase of the two phases involves construction of a look up table (Alternatively referred as correlation table), while a second phase details deployment in production. In an embodiment, at step 202 of the present disclosure, the one or more hardware processors 104 are configured to receive, a plurality of test data $D_{test}$ and a model under evaluation $M$ as an input from a user. In an embodiment, the plurality of test data $D_{test}$ and the model under evaluation $M$ are received through a graphical user interface. In an embodiment, the user could be a human, an externally system or device connected through network and configured to provide the input data using the graphical user interface. The plurality of test data $D_{test}$ may include but not limited to a text data, an audio data, an image data, a video data, and/or the like. The plurality of test data $D_{test}$ may pertain but not limited to a retail domain, a finance domain, life science domain, health care domain, manufacturing domain, and/or the like. In an embodiment, the model under evaluation $M$ is an artificial intelligence based model or a machine learning based model. The model under evaluation $M$ may further include but not limed to a deep learning model, a regression model, a random forest model, a XGBoost, and neural network based models such as convolutional neural network (CNN) model, recurrent neural network (RNN)based model, and/or the like. In the context of the present disclosure, expressions 'model' and expressions 'machine learning (ML) model' and 'artificial intelligence (AI) model' can be interchangeably used.

In an embodiment, at step 204 of the present disclosure, the one or more hardware processors 104 are configured to compute a drift distribution of the plurality of test data $D_{test}$ using one or more user specified drift computation methods. The one or more user specified drift computation methods may include but not limited to Jensen-Shannon (JS) distance method, Kullback-Leibler (KL) divergence method, Maximum-Mean-Discrepancy method, and/or the like.

In an embodiment, at step 206 of the present disclosure, the one or more hardware processors 104 are configured to compare a spread in the computed drift distribution of the plurality of test data $D_{test}$ with a predefined threshold. In an embodiment, the predefined threshold is configurable and specified by the user depending upon the application. The predefined threshold is denoted by $\delta$. The spread in the computed drift distribution is indicative of a minimum to maximum value of the computed drift distribution of the plurality of test data $D_{test}$.

In an embodiment, at step 208 of the present disclosure, when the spread in the computed drift distribution of the plurality of test data $D_{test}$ exceeds the predefined threshold, the one or more hardware processors 104 are configured to perform steps that includes first partitioning, the plurality of test data $D_{test}$ into a first dataset and a second dataset. The first dataset is indicative of a reference dataset and denoted as $x_{ref}$. Size of the reference dataset $x_{ref}$ is specified by user depending on size of the test data $D_{test}$ itself. The second dataset is divided into a plurality of data buckets. The second dataset is indicative of remaining part of the test data $D_{test}$ and denoted by $D_{test}$ - $x_{ref}$. The data buckets are chosen randomly with a user defined sample size. Further, a first set of model parameters are determined for a plurality of data samples comprised in each data bucket from the plurality of data buckets with respect to the first dataset. The plurality of data samples comprised in each data bucket from the plurality of data buckets is denoted by $x_i$ where $i$ denotes the $i^{th}$ data bucket. In an embodiment, the first set of model parameters include a drift distance, model uncertainty, and one or more model performance metrics. In an embodiment, the drift distance is determined using a *compute_drift()* module which evaluates drift of each data bucket using any user specified drift evaluating method. *compute_uq*() module which evaluates the model uncertainty of each data bucket using user specified drift evaluation method. Similarly, the one or more model performance metrics for each data bucket are determined using a *compute_mperf*() module. In an embodiment, the one or more model performance metrics comprises of an accuracy, an F1 score, and an average precession. In an embodiment, the one or more model performance metrics and an evaluation function can be supplied from user end depending on a particular case study. Furthermore, a first look up table is constructed by identifying a correlation among a plurality of model parameters in the first set of model parameters. In an embodiment, the lookup table could be interchangeably used as a correlation table in the description of the present disclosure. In an embodiment, the correlation table stores the drift distance, the model uncertainty, and the one or more model performance metrics. The correlation table is constructed only once and acts as a lookup or reference table for evaluating the ML model performance for a given drift.

However, when the spread in the drift distribution of the plurality of test data $D_{test}$ is below the predefined threshold, it indicates that there is no significant drift distribution of data with respect to the reference dataset chosen from the plurality of test data $D_{test}$ due to insufficient number of data samples in the second dataset. In such scenarios, the second dataset is perturbed to obtain a perturbed dataset using noise perturbations though a *perturb*() module. The noise perturbations are sampled from gaussian, uniform or poisson distributions and are linearly superposed on top of a plurality of true samples of the second dataset. Mathematically, every $i^{th}$ point denoted by $X_i$ in the perturbed dataset D is represented as provided in equation (1) below as:

$$X_i = \alpha_i + \beta_i, \ i \sim D \qquad \text{--- (1)}$$

Here, $\beta_i$ denotes $i^{th}$ noise point sampled from gaussian, uniform or poisson distributions. In an embodiment, $\beta_i \sim N(\mu, \Sigma)$, $\beta_i \sim U(a, b)$, and $\beta_i \sim P(k, \Delta)$. Here, $\mu$ represents mean and $\Sigma$ represents standard deviation of the normal distribution which can be user specified depending on a use case, $a$ and b represent upper and lower limits of the normal distribution respectively which is user defined, and $k$, $\Delta$ denotes user supplied poisson parameters.

Further, a second set of model parameters is determined for a plurality of data samples comprised in each data bucket from a plurality of data buckets of the perturbed dataset with respect to the first dataset. The second set of model parameters include a fitted drift mean, the model uncertainty, and the one or more model performance metrics. For perturbed data samples, the drift distance is determined using the *compute_drif t*() module and determined drift distance samples are fitted with a normal distribution. The mean of the fitted normal distribution of the drift distance samples is used to parametrize the drift in a particular data bucket. In other words, the perturbed data samples in each data bucket are fitted with a normal distribution and a corresponding drift mean is obtained. So instead of drift distance, deviations in each data bucket are characterized by the mean of drift distance distribution. Further, a second look up table is constructed by identifying a correlation among each of the second set of model parameters. In an embodiment, the first look up table and second look up table are different.

In an embodiment, the performance of the model under evaluation $M$ is evaluated when the model under evaluation $M$ is deployed in production. Thus, after construction of the first look table or the second look up table during offline phase (i.e., first phase), the model is deployed in production which indicates initiation of an online phase (i.e., second phase).

In an embodiment, at step 210 of the present disclosure, the one or more hardware processors 104 are configured to compute a drift distribution of a plurality of incoming test data received from the user. In an embodiment, the plurality of incoming data represents new production data. In an embodiment, the drift distribution of a plurality of incoming test data is computed using the one or more user specified drift computation methods.

Further, at step 212, a drift value cell is identified from the first look up table corresponding to the computed drift distribution of the plurality of incoming test data. The drift value cell is identified based on (i) a minimum deviation between the computed drift distribution of the plurality of incoming test data and a plurality of pre-stored drift distance values in the first look up table and (ii) a minimum value of model uncertainty. Further, at step 214, at least one of the one or more model performance metrics corresponding to the identified drift value cell from the first look up table is estimated to evaluate an optimal performance of the model under evaluation $M$. In other words, for a user specified incoming dataset, once the drift distance is computed, a corresponding drift value cell from the first look up table (alternatively referred as correlation table) which is having minimum deviation with respect to the computed drift distance value is identified. Along with that nearest neighboring two drift value cells having subsequent higher and lower values are chosen. There can be multiple drift value cells corresponding to a single drift distance. Thus, the drift value cell corresponding to the minimum model uncertainty value is selected as that represents most stable model performance.

However, when the spread in the drift distribution of the plurality of test data $D_{test}$ is below the predefined threshold, a fitted mean of drift distribution of the plurality of incoming test data is computed and the drift value cell is identified from the second look up table corresponding to the computed fitted mean of the drift distribution of the plurality of incoming test data. The drift value cell is identified based on (i) a minimum deviation between the computed fitted mean of drift distribution of the plurality of incoming test data and a plurality of pre-stored drift distance values in the first look up table and (ii) a minimum value of model uncertainty. Further, the optimal performance of the model under evaluation $M$ is evaluated by estimating at least one of the one or more model performance metrics corresponding to the identified drift value cell from the second look up table. In an embodiment, a sample look up table for a fraud detection use case is provided in Table 1. Each row in Table 1 represents the drift distance or fitted drift mean of the distribution, model uncertainty and model performance metric values (Average precision is used as the model performance metric in Table 1). As shown in Table 1, the drift estimated for a given production point was computed to be 0.01195 and nearest neighbor or minimum deviation point with respect to the production point was 0.011935 which corresponds to multiple average precision values. Among them, the lowest model uncertainty value is 0.0189 which corresponds to a model performance of 0.793. This model performance of 0.793 stands to be most stable operating accuracy of the model.

Table 1

| Drift/Fitted drift mean | Model performance Metric (Avg precision) | Model Uncertainty (UQ) |
|---|---|---|
| 0.025905 | 0.650 | 0.062 |
| 0.024873 | 0.720 | 0.081 |
| 0.024900 | 0.790 | 0.054 |
| 0.020101 | 0.720 | 0.058 |
| 0.020101 | 0.732 | 0.054 |
| 0.020101 | 0.736 | 0.051 |
| 0.019830 | 0.790 | 0.061 |
| 0.015011 | 0.789 | 0.039 |
| 0.015180 | 0.791 | 0.040 |
| 0.011935 | 0.793 | 0.018 |
| 0.011935 | 0.898 | 0.022 |
| 0.011935 | 0.799 | 0.031 |

(continued)

| Drift/Fitted drift mean | Model performance Metric (Avg precision) | Model Uncertainty (UQ) |
|---|---|---|
| 0.009172 | 0.8 | 0.052 |

The entire approach/method of the present disclosure for estimating the ML model performance for a given drift using a correlation table between drift, model performance metrics and model uncertainty estimate can be further better understood by way of following pseudo code provided as example:

**Data:** $D_{test}$ ; **Model**: $M$

**Initialize:** $x_{ref} \in D_{test}$

$D_{test} - x_{ref} : x_i \rightarrow i = random(N)$

**if compute_drift$(x_i) > \delta_{drift}$ then**

    $Eval\_Perform()$

**else**

    $Perturb\_Eval\_Perform()$

**End**

$Eval\_Perform():$

**for** $i = 1 \rightarrow N$ **do**

    $drift = \mathbf{compute\_drift}(x_{ref}, x_i)$

    $uq = \mathbf{compute\_uq}(y_i, predict(model, x_i))$

    $mperf = \mathbf{compute\_mperf}(x_i, y_i)$

**end**

$$Store : \boldsymbol{Correlation\,Table}\,(T :\, drift, uq, mperf)$$

$$estimate\_model\_acc(x_{val})$$

$$\textbf{while}\ True\ \textbf{do}$$

$$drift_{val} = \boldsymbol{compute\_drift}(x_{ref}, x_{val})$$

$$\textbf{for}\ k\ in\ T\ \textbf{do}$$

$$(|drift_{val} - drift_k|)$$

$$\textbf{end}$$

$$k_{min} = k{:} \rightarrow \boldsymbol{min}(|drift_{val} - drift_k|)$$

$$(mperf, uq)_p :\rightarrow p = k_{min}, k_{min-1}, k_{min+1}$$

$$(mperf)_{best} = (mperf)_p :\rightarrow min(uq_p)$$

$$\textbf{if}\ |(mperf)_{best} - (mperf)_{val}| > \delta$$

$$\textbf{then}$$

$$\textbf{return}\ (mperf)_{best}$$

$$\boldsymbol{Raise\ trigger}$$

$$\textbf{end}$$

$$\textbf{end}$$

The method of the present disclosure for estimating the ML model performance for a given drift using a correlation table between drift, model performance metrics and model uncertainty estimate when the spread in the drift distribution of the plurality of test data $D_{test}$ is below the predefined threshold is further better understood by way of following pseudo code provided as:

$$\textbf{Data:}\ D_{test}\ ;\ \textbf{Model:}\ M$$

$$\textbf{Initialize:}\ x_{ref} \in D_{test}$$

$$D_{test} - x_{ref} : x_i \rightarrow i = random(N)$$

$$X_i = x_i + \boldsymbol{perturb}(x_i)$$

$$\textbf{for}\ i = 1 \rightarrow N\ \textbf{do}$$

$$drift = \boldsymbol{compute\_drift}\left(x_{ref}, x_i\right)$$

$$drift_{mean} = \boldsymbol{fit}(drift)$$

$$uq = \boldsymbol{compute\_uq}\left(y_i, predict(model, x_i)\right)$$

$$mperf = \boldsymbol{compute\_mperf}(x_i, y_i)$$

**end**

$$Store : \boldsymbol{Correlation\ Table}\ (T : drift\_mean, uq, mperf)$$

$\boldsymbol{Input}$: $x_{val}$

**while** $True$ **do**

$$drift\_mean_{val} = \boldsymbol{compute\_drift}\left(x_{ref}, \boldsymbol{fit}(x_{val})\right)$$

**for** $k\ in\ T$ **do**

$$(|drift\_mean_{val} - drift_k|)$$

**end**

$$k_{min} = k: \rightarrow \boldsymbol{min}(|drift\_mean_{val} - drift_k|)$$

$$(mperf, uq)_p :\rightarrow p = k_{min}, k_{min-1}, k_{min+1}$$

$$(mperf)_{best} = (mperf)_p :\rightarrow min\left(uq_p\right)$$

**end**

**if** $|(mperf)_{best} - (mperf)_{val}| > \delta$ **then**

    **return** $(mperf)_{best}$

    $\boldsymbol{Raise\ trigger}$

**end**

In an embodiment, mathematical framework of the present disclosure is explained by way of the following exemplary explanation.

The mathematical formulation of the present disclosure is based on Fast Hoeffding Drift Detection method (FHDDM) which relies on Hoeffding Inequality. This can be used to detect any deviation between expected and observed model performance caused due to drift.

**Mathematical Formulation:**

If $\overline{X}$ denotes a measure of a random variable $X$ at a given instance, and $E[X]$ denotes expectation value of $X$, then a probability that deviation between the two quantities exceeds a predefined threshold is provide in equation (2) below as:

$$P(|\overline{X} - E[X]| \geq \epsilon) \leq \alpha, \quad (2)$$

Where, $\varepsilon$ is provided in equation (3) below:

$$\epsilon = \sqrt{\frac{1}{2n} \ln \frac{2}{\alpha}} \quad (3)$$

In the present disclosure, the probability that deviation between the two quantities exceeds a predefined threshold is provided as shown in equation (4) below:

$$P(|f_\theta(X_i) - E[f_\theta(X_i)]| \geq \epsilon_\theta) \leq \alpha, \ \forall i \quad (4)$$

Here, $X_i$ denotes test data in $i^{th}$ data bucket, $X_r$ denotes reference dataset, $\theta$ denotes user supplied trained model, $f_\theta(X_i)$ denotes labels predicted by the model for $X_i$, $E[f_\theta(X_i)]$ denotes true labels corresponding to $X_i$, $\varepsilon_\theta$ denotes maximum deviation of the model predictions and true labels for a given model $\theta$, $n$ denotes sample size in each data bucket, and $\alpha$ denotes significance level.

**Empirical Reasoning:**

For a given choice of significance level i.e., $\alpha$ and a given sample size i.e., $n$, deviations between an observed and an expected model performance caused due to variation in confidence levels is estimated. In the present disclosure, the sample size is fixed to be 40 and a list of the different deviations between the observed and the expected model performance caused due to variation in confidence levels is listed. Table 2 and Table 3 provides a list of empirical observations. Table 2 shows the variation of the error bounds with the confidence interval for credit card fraud detection dataset with sample size 5000.

Table 2

| Sample size: 5000 (Credit card fraud detection) | | | |
|---|---|---|---|
| $\alpha$ | Probability (%) | Confidence level | $\varepsilon(\%)$ |
| 0.01 | 99 | $3\sigma$ | 2.30 |
| 0.05 | 95 | $2\sigma$ | 1.92 |
| 0.32 | 68 | $1\sigma$ | 1.49 |

Similarly, Table 3 shows the variation of the error bounds with the confidence interval for loan predict dataset with sample size 40.

Table 3

| Sample size: 40 (Loan Predict) | | | |
|---|---|---|---|
| $\alpha$ | Probability (%) | Confidence level | $\varepsilon(\%)$ |
| 0.01 | 99 | $3\sigma$ | 25 |
| 0.05 | 95 | $2\sigma$ | 21.47 |
| 0.32 | 68 | $1\sigma$ | 16.60 |

It is observed form Table 2 and Table 3 that for a given sample size, with low deviation between the expected and the observed model performance the confidence level increases and hence the model uncertainty associated with the model decreases because the model is more prone to predict what is expected. Hence, the model accuracy having the lowest model uncertainty or high confidence is selected. From the empirical observations listed in Table 2 and Table 3, it is inferred that as the model confidence increases, thereby leading to decrease in uncertainty associated with the model, the maximum probability that the model prediction deviates from the true labels decreases increases and corresponding deviation between the predicted and actual label also decreases. From the above empirical observation in Tables 2, 3 and equation (4), the following Lemma as provide in equation (5) below is formulated, which states that:

**Lemma 1** With decreasing model confidence and increasing model uncertainty ($\sigma$), the maximum error bound ($\varepsilon$) increases linearly with the slope dependent on the sample size and significance level.

$$\epsilon_\theta(n, \alpha) \sim g_\theta(n, \alpha)\sigma + h_\theta(n, \alpha) \quad (5)$$

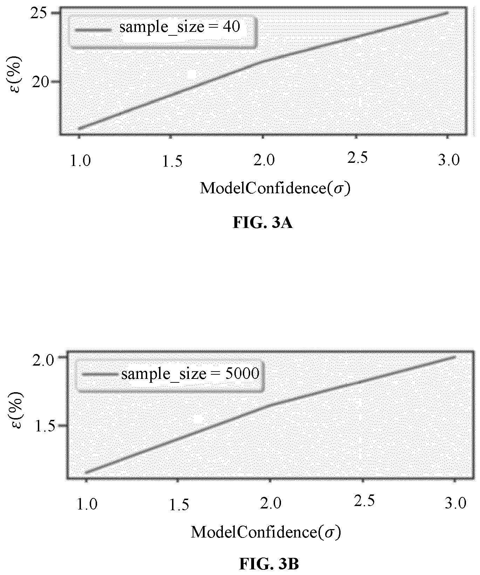

$g_\theta(n, \alpha), h_\theta(n, \alpha)$ denote slope and intercept of the $\varepsilon$ - $\sigma$ variation respectively. The value of the slope and intercept parameter depends on the sample size of specific case under consideration, and significance level of choice. Nevertheless, the linear trend holds up. FIGS. 3A and 3B depict graphical representations to illustrate variation of error bound with model confidence for the sample size 40 and 5000 respectively, in accordance with an embodiment of the present disclosure.

**Experimental Results:**

In the present disclosure, goal of experiments was to estimate the deviation in the ML model performance from the true labels for a user defined dataset using the drift distribution of the new dataset and the model uncertainty. The experiments are carried out on both tabular data and image data. The present discourse describes experimental details and the results of the conducted experiments on different type of data below:

**Experimental details**

In the present disclosure, the different type of data on which the experiments are conducted include loan predict data, credit card fraud detection, balanced prediction data and MNIST data. Experimental details are summarized in Table 4 provided below as:

Table 4

| Case Study | Data | Type | Model | Performance metric |
|---|---|---|---|---|
| Loan | Tabular | Classification | Random | Accuracy |
| Predict | Tabular | Classification | Forest | Average |
| Credit card fraud detection | Image | Classification | XGBoost | Precession Accuracy |
| MNIST | Tabular | Regression | CNN | Mean |
| Balance prediction | | | Random Forest | Squared Error |

For loan predict data, there were 12 attributes out of which 5 are categorical and the rest are numerical. The label is represented by two classes. Further, the ML model was trained using Random Forest Classifier with the hyperparameters $n\_estimators$ = 10, $max\_depth$ = 3, $min\_samples\_leaf$ = 3. The hyperparameters were chosen via GridSearchCV. Since the loan predict data was more or less balanced with the two classes constituting around 68% and 32% of the entire data, the ML model performance metric was chosen to be Accuracy. Depending on imbalance ratio, a different metric is chosen. Further, 80% of the loan predict data was used for training and rest 20% for testing. The **ML** model was trained on the training data and used as a reference model. A part of the test data was used as the reference data for drift and model uncertainty computation. The remaining part of the test data is divided into multiple buckets of sample size 5000, distributed randomly. For each bucket, the ML model performance, drift and model uncertainty are computed and stored in a look up table which is used for evaluating the model performance for a given drift.

For credit card fraud detection data, there were 16 input features out of which 5 are categorical columns and rest are numerical columns. The label is represented by two classes. The ML model was trained using XGBoost model with the hyperparameters $n\_estimators$ = 200, $max\_depth$ = 11, $learning\_rate$ = 0.3. The hyperparameters were chosen via RandomizedSearchCV. The actual distribution of the classes in the test data was highly imbalanced. Hence the metric chosen for the credit card fraud detection data was average precession. In the present disclosure, the experiment for multiple imbalance ratios between different classes to account for the robustness. 70% of the credit card fraud detection data was used for training and rest 30% for testing. A part of the test data was used for reference and the remaining part was divided into buckets of samples size 40 to compute the model performance, drift and model uncertainty table. For each bucket, the model performance, drift and model uncertainty are computed and stored in a look up table which is used for evaluating model performance for a given drift.

In the present disclosure, MNIST dataset from tensorflow Keras module is considered. The data in MNIST dataset consisted of 60000 grey scale images of handwritten digits from 0 to 9. The output has 10 classes in total. Further, convolutional neural network (CNN) is used with the convolution layer having filter size(3,3) followed by a max pooling layer and dense layers. During experiments, 70% of the images for training and 30% for testing are used and accuracy is chosen as the metric.

**Results and observations**

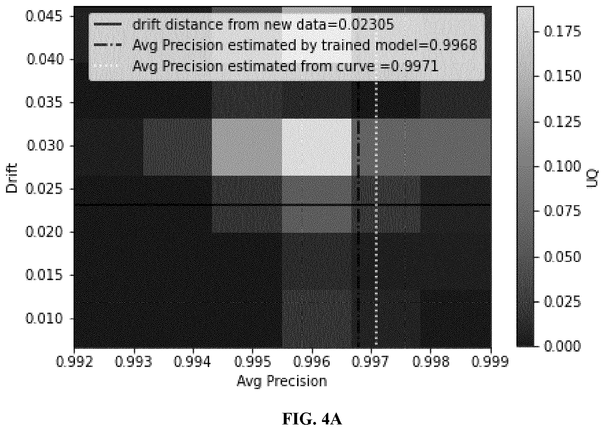

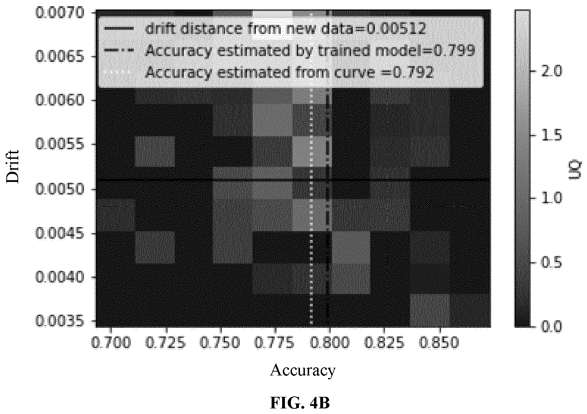

The present disclosure reports results in terms of predicted model performance and actual model performance. FIGS. 4A and 4B depict plots illustrating correlation between drift, model performance and model uncertainty for two different type of sample data, in accordance with an embodiment of the present disclosure. FIG. 4A depict the plot illustrating correlation between drift, model performance and model uncertainty for credit card fraud detection data, in accordance with an embodiment of the present disclosure. FIG. 4B depict the plot illustrating correlation between drift, model performance and model uncertainty for loan predict data, in accordance with an embodiment of the present disclosure. Each cell in the plots represent a distinct bucket containing a subsample of test data. These essentially depicts a geometrical representation of the look up table or correlation table. In FIGS. 4A and 4B, the solid and dotted lines represent the predicted model performance and actual model performance respectively. It is observed that that for all loan predict, fraud detection and MNIST datasets, the predicted model performance and true value lies within the 10% error bars. This explains that model uncertainty based filtering and choice of minimum model uncertainty is robust across the type of dataset. In other words, the different cells represent each bucket and different axis denote the drift, model performance, and third dimension represented by bars denotes the model uncertainty. The different cells were constructed using the correlations computed from drift, model uncertainty, and model performance. The solid line denotes the model performance using the baseline or trained model while the dotted line represents the model performance estimated from the lookup table. It is observed from FIS. 4A and 4B that there can be multiple model performances associated with a given drift. However, the model performance corresponding to lowest model uncertainty is selected as it ensures highest model confidence.

The written description describes the subject matter herein to enable any person skilled in the art to make and use the embodiments. The scope of the subject matter embodiments is defined herein and may include other modifications that occur to those skilled in the art. Such other modifications are intended to be within the scope of the present disclosure if they have similar elements that do not differ from the literal language of the embodiments or if they include equivalent elements with insubstantial differences from the literal language of the embodiments described herein.

Retraining the ML model is computationally expensive and might require additional resources and efforts. The embodiments of present disclosure provide a system and method that estimates the model performance from a given user data, having different distribution from the training data, without having to retrain the model and in line with the mathematical consistencies. In the method of present disclosure, the model performance of an AI model deployed in production is estimated, in absence of ground truths. Moreover, this can be done without retraining the model, thus saving computational costs and resources. The method of the present disclosure can be used and performed in real time.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated herein by the following claims.

**Claims**

1. A processor implemented method (200) for estimating and evaluating performance of a model in a production environment, comprising:

   receiving (202), via one or more hardware processors (104), a plurality of test data $D_{test}$ and a model under evaluation $M$ as an input from a user, wherein the model under evaluation is an artificial intelligence based model or a machine learning based model, **characterized in that**:

   computing (204), via the one or more hardware processors (104), a drift distribution of the plurality of test data $D_{test}$ using one or more user specified drift computation methods;

   comparing (206), via the one or more hardware processors (104), a spread in the computed drift distribution of the plurality of test data $D_{test}$ with a predefined threshold;

   performing (208), via the one or more hardware processors (104), steps (i) through (iii) when the spread in the computed drift distribution of the plurality of test data $D_{test}$ exceeds the predefined threshold:

   (i) partitioning, the plurality of test data $D_{test}$ into a first dataset and a second dataset, wherein the first dataset is indicative of a reference dataset and denoted as $x_{ref}$ and size of the reference dataset $x_{ref}$ is specified by user depending on size of the test data $D_{test}$, and the second dataset is indicative of remaining part of the test data $D_{test}$ and denoted by $D_{test}$ - $x_{ref}$ and wherein the second dataset is divided into a plurality of data buckets, wherein the data buckets are chosen randomly with a user defined sample size,

   (ii) determining, a first set of model parameters for a plurality of data samples comprised in each data bucket from the plurality of data buckets, wherein the first set of model parameters includes a drift distance, a model uncertainty, and one or more model performance metrics, wherein the drift distance is determined using a *compute_drift()* module which evaluates drift of each data bucket using any user specified drift evaluating method, the model uncertainty is determined using a *compute_uq*() module which evaluates the model uncertainty of each data bucket using user specified drift evaluation method and the one or more model performance metrics are determined using a *compute_mperf*() module, and

   (iii) constructing, a first look up table by identifying a correlation among a plurality of model parameters in the first set of model parameters, wherein the first look up table stores the drift distance, the model uncertainty, and the one or more model performance metrics;

   computing (210), via the one or more hardware processors (104), a drift distribution of a plurality of incoming test data received from the user;

   identifying (212), via the one or more hardware processors (104), a drift value cell from the first look up table, corresponding to the computed drift distribution of the plurality of incoming test data, wherein the drift value cell is identified based on (i) a minimum deviation between the computed drift distribution of the plurality of incoming test data and a plurality of pre-stored drift distance values in the first look up table, and (ii) a minimum value of model uncertainty, wherein a cell from the first look up table is identified as the drift value cell if the drift distance computed for a user specified incoming dataset is having minimum deviation with respect to the drift distance value present in corresponding cell of the first look up table; and

   estimating (214), via the one or more hardware processors (104), at least one of the one or more model performance metrics corresponding to the identified drift value cell from the first look up table to evaluate an optimal performance of the model under evaluation $M$, wherein nearest neighboring two drift value cells having subsequent higher and lower values as compared to drift value cell of the first look up table are chosen and drift value cell corresponding to the minimum model uncertainty value is selected as that representing stable model performance.

2. The processor implemented method (200) as claimed in claim 1, wherein the predefined threshold is configurable.

3. The processor implemented method (200) as claimed in claim 1, wherein the one or more model performance metrics comprises of an accuracy, an F1 score, and an average precession.

4. The processor implemented method (200) as claimed in claim 1, wherein when the spread in the drift distribution of the plurality of test data $D_{test}$ is below the predefined threshold, the method comprising:

perturbing, the second dataset to obtain a perturbed dataset using noise perturbations, wherein the noise perturbations are sampled from gaussian, uniform or poisson distributions and linearly superposed on top of a plurality of true samples of the second dataset;

determining, a second set of model parameters for a plurality of data samples comprised in each data bucket from a plurality of data buckets of the perturbed dataset, wherein the second set of model parameters include a fitted drift mean, the model uncertainty, and the one or more model performance metrics;

constructing, a second look up table by identifying a correlation among each of the second set of model parameters, wherein the second look up table stores the fitted drift mean, the model uncertainty, and the one or more model performance metrics;

computing, a fitted drift mean distribution of the plurality of incoming test data received from the user;

identifying, a drift value cell from the second look up table corresponding to the computed fitted drift mean distribution of the plurality of incoming test data, wherein the drift value cell is identified based on (i) a minimum deviation between the computed fitted drift mean distribution of the plurality of incoming test data and a plurality of pre-stored fitted drift mean values in the second look up table and (ii) a minimum value of model uncertainty, wherein a cell from the second look up table is identified as the drift value cell if the fitted drift mean distribution computed for a user specified incoming dataset is having minimum deviation with respect to the fitted drift mean distribution value present in corresponding cell of the second look up table; and

estimating, at least one of the one or more model performance metrics corresponding to the identified drift value cell from the second look up table to evaluate an optimal performance of the model under evaluation M.

5. The processor implemented method (200) as claimed in claim 1, wherein the optimal performance of the model under evaluation $M$ is evaluated when the model under evaluation $M$ is deployed in production.

6. A system (100) for estimating and evaluating performance of a model in a production environment, , comprising:

a memory (102) storing instructions;

one or more communication interfaces (106); and

one or more hardware processors (104) coupled to the memory (102) via the one or more communication interfaces (106), wherein the one or more hardware processors (104) are configured by the instructions to:

receive, a plurality of test data $D_{test}$ and a model under evaluation $M$ as an input from a user, wherein the model under evaluation is an artificial intelligence based model or a machine learning based model, **characterized in that**:

compute, a drift distribution of the plurality of test data $D_{test}$ using one or more user specified drift computation methods;

compare, a spread in the computed drift distribution of the plurality of test data $D_{test}$ with a predefined threshold;

perform, steps (i) through (iii) when the spread in the computed drift distribution of the plurality of test data $D_{test}$ exceeds the predefined threshold:

(i) partitioning, the plurality of test data $D_{test}$ into a first dataset and a second dataset, wherein the second dataset is divided into a plurality of data buckets, wherein the first dataset is indicative of a reference dataset and denoted as $x_{ref}$ and size of the reference dataset $x_{ref}$ is specified by user depending on size of the test data $D_{test}$, and the second dataset is indicative of remaining part of the test data $D_{test}$ and denoted by $D_{test} - x_{ref}$ and wherein the second dataset is divided into a plurality of data buckets, wherein the data buckets are chosen randomly with a user defined sample size,

(ii) determining, a first set of model parameters for a plurality of data samples comprised in each data bucket from the plurality of data buckets, wherein the first set of model parameters includes a drift distance, a model uncertainty, and one or more model performance metrics, wherein the drift distance is determined using a *compute_drift()* module which evaluates drift of each data bucket using any user specified drift evaluating method, the model uncertainty is determined using a *compute_uq*() module which evaluates the model uncertainty of each data bucket using user specified drift evaluation method and the one or more model performance metrics are determined using a *compute_mperf*() module, and

(iii) constructing, a first look up table by identifying a correlation among a plurality of model parameters in the first set of model parameters wherein the first look up table stores the drift distance, the model uncertainty, and the one or more model performance metrics;

compute, a drift distribution of a plurality of incoming test data received from the user;

identify, a drift value cell from the first look up table corresponding to the computed drift distribution of the plurality of incoming test data, wherein the drift value cell is identified based on (i) a minimum deviation between the computed drift distribution of the plurality of incoming test data and a plurality of pre-stored drift distance values in the first look up table, and (ii) a minimum value of model uncertainty, wherein a cell from the first look up table is identified as the drift value cell if the drift distance computed for a user specified incoming dataset is having minimum deviation with respect to the drift distance value present in corresponding cell of the first look up table; and

estimate, at least one of the one or more model performance metrics corresponding to the identified drift value cell from the first look up table to evaluate an optimal performance of the model under evaluation $M$, wherein nearest neighboring two drift value cells having subsequent higher and lower values as compared to drift value cell of the first look up table are chosen and drift value cell corresponding to the minimum model uncertainty value is selected as that representing stable model performance.

7. The system as claimed in claim 6, wherein the predefined threshold is configurable.

8. The system as claimed in claim 6, wherein the one or more model performance metrics comprises of an accuracy, an F1 score, and an average precession.

9. The system as claimed in claim 6, wherein when the spread in the drift distribution of the plurality of test data $D_{test}$ is below the predefined threshold is further configured to:

perturb, the second dataset to obtain a perturbed dataset using noise perturbations, wherein the noise perturbations are sampled from gaussian, uniform or poisson distributions and linearly superposed on top of a plurality of true samples of the second dataset;

determine, a second set of model parameters for a plurality of data samples comprised in each data bucket from a plurality of data buckets of the perturbed dataset, wherein the second set of model parameters include a fitted drift mean, the model uncertainty, and the one or more model performance metrics;

construct, a second look up table by identifying a correlation among each of the second set of model parameters, wherein the second look up table stores the fitted drift mean, the model uncertainty, and the one or more model performance metrics;

compute, a fitted drift mean distribution of the plurality of incoming test data received from the user;

identify, a drift value cell from the second look up table corresponding to the computed fitted drift mean distribution of the plurality of incoming test data, wherein the drift value cell is identified based on (i) a minimum deviation between the computed fitted drift mean distribution of the plurality of incoming test data and a plurality of pre-stored fitted drift mean values in the second look up table and (ii) a minimum value of model uncertainty, wherein a cell from the second look up table is identified as the drift value cell if the fitted drift mean distribution computed for a user specified incoming dataset is having minimum deviation with respect to the fitted drift mean distribution value present in corresponding cell of the second look up table; and

estimate, at least one of the one or more model performance metrics corresponding to the identified drift value cell from the second look up table to evaluate an optimal performance of the model under evaluation $M$.

10. The system as claimed in claim 6, wherein the optimal performance of the model under evaluation $M$ is evaluated when the model under evaluation $M$ is deployed in production.

11. One or more non-transitory computer readable mediums for estimating and evaluating performance of a model in a production environment, comprising one or more instructions which when executed by one or more hardware processors cause:
receiving, a plurality of test data $D_{test}$ and a model under evaluation $M$ as an input from a user, wherein the model under evaluation is an artificial intelligence based model or a machine learning based model, **characterized in that**:

computing, a drift distribution of the plurality of test data $D_{test}$ using one or more user specified drift computation methods;

comparing, a spread in the computed drift distribution of the plurality of test data $D_{test}$ with a predefined threshold;

performing, via the one or more hardware processors, steps (i) through (iii) when the spread in the computed drift distribution of the plurality of test data $D_{test}$ exceeds the predefined threshold:

(i) partitioning, the plurality of test data $D_{test}$ into a first dataset and a second dataset, wherein the second dataset is divided into a plurality of data buckets, wherein the first dataset is indicative of a reference dataset and denoted as $x_{ref}$ and size of the reference dataset $x_{ref}$ is specified by user depending on size of the test data $D_{test}$, and the second dataset is indicative of remaining part of the test data $D_{test}$ and denoted by $D_{test} - x_{ref}$ and wherein the second dataset is divided into a plurality of data buckets, wherein the data buckets are chosen randomly with a user defined sample size,

(ii) determining, a first set of model parameters for a plurality of data samples comprised in each data bucket from the plurality of data buckets wherein the first set of model parameters includes a drift distance, a model uncertainty, and one or more model performance metrics wherein the drift distance is determined using a *compute_drift()* module which evaluates drift of each data bucket using any user specified drift evaluating method, the model uncertainty is determined using a *compute_uq*() module which evaluates the model uncertainty of each data bucket using user specified drift evaluation method and the one or more model performance metrics are determined using a *compute_mperf*() module, and

(iii) constructing, a first look up table by identifying a correlation among a plurality of model parameters in the first set of model parameters, wherein the first look up table stores the drift distance, the model uncertainty, and the one or more model performance metrics;;

computing, a drift distribution of a plurality of incoming test data received from the user;

identifying, a drift value cell from the first look up table, corresponding to the computed drift distribution of the plurality of incoming test data, wherein the drift value cell is identified based on (i) a minimum deviation between the computed drift distribution of the plurality of incoming test data and a plurality of pre-stored drift distance values in the first look up table, and (ii) a minimum value of model uncertainty wherein a cell from the first look up table is identified as the drift value cell if the drift distance computed for a user specified incoming dataset is having minimum deviation with respect to the drift distance value present in corresponding cell of the first look up table; and

estimating, at least one of the one or more model performance metrics corresponding to the identified drift value cell from the first look up table to evaluate an optimal performance of the model under evaluation *M,* wherein nearest neighboring two drift value cells having subsequent higher and lower values as compared to drift value cell of the first look up table are chosen and drift value cell corresponding to the minimum model uncertainty value is selected as that representing stable model performance.

**Patentansprüche**

1. Prozessorimplementiertes Verfahren (200) zum Schätzen und Bewerten der Leistung eines Modells in einer Produktionsumgebung, umfassend:

Empfangen (202), über einen oder mehrere Hardwareprozessoren (104), einer Mehrzahl von Testdaten $D_{Test}$ und eines zu bewertenden Modells *M* als eine Eingabe von einem Benutzer, wobei das zu bewertende Modell ein auf künstlicher Intelligenz basierendes Modell oder ein auf maschinellem Lernen basierendes Modell ist, **dadurch gekennzeichnet, dass**:

Berechnen (204), über den einen oder die mehreren Hardwareprozessoren (104), einer Driftverteilung der Mehrzahl von Testdaten $D_{Test}$ unter Verwendung eines oder mehrerer benutzerspezifizierter Driftberechnungsverfahren;

Vergleichen (206), über den einen oder die mehreren Hardwareprozessoren (104), einer Streuung in der berechneten Driftverteilung der Mehrzahl von Testdaten $D_{Test}$ mit einem vordefinierten Schwellenwert;

Durchführen (208), über den einen oder die mehreren Hardwareprozessoren (104), der Schritte (i) bis (iii), wenn die Streuung in der berechneten Driftverteilung der Mehrzahl von Testdaten $D_{Test}$ den vordefinierten Schwellenwert überschreitet:

(i) Partitionieren der Mehrzahl von Testdaten $D_{Test}$ in einen ersten Datensatz und einen zweiten Datensatz, wobei der erste Datensatz einen Referenzdatensatz angibt und als $x_{ref}$ bezeichnet wird und die Größe des Referenzdatensatzes $x_{ref}$ vom Benutzer abhängig von der Größe der Testdaten $D_{Test}$ spezifiziert wird und der zweite Datensatz einen verbleibenden Teil der Testdaten $D_{Test}$ angibt und durch $D_{Test} - x_{ref}$ bezeichnet wird und wobei der zweite Datensatz in eine Mehrzahl von Datenbuckets unterteilt ist, wobei Datenbuckets zufällig mit einer benutzerdefinierten Probengröße ausgewählt werden,

(ii) Bestimmen eines ersten Satzes von Modellparametern für eine Mehrzahl von Datenproben, die in jedem Datenbucket aus der Mehrzahl von Datenbuckets enthalten sind, wobei der erste Satz von Modellparametern eine Driftdistanz, eine Modellunsicherheit und eine oder mehrere Modellleistungsmetriken beinhaltet, wobei die Driftdistanz unter Verwendung eines *berechnen_Drift*()-Moduls bestimmt wird, das die Drift jedes Datenbuckets unter Verwendung eines benutzerspezifizierten Driftbewertungsverfahrens bewertet, die Modellunsicherheit unter Verwendung eines *berechnen_uq*()-Moduls bestimmt wird, das die Modellunsicherheit jedes Datenbuckets unter Verwendung eines benutzerspezifizierten Driftbewertungsverfahrens bewertet, und die eine oder die mehreren Modellleistungsmetriken unter Verwendung eines *berechnen_mperf*()-Moduls bestimmt werden, und

(iii) Konstruieren einer ersten Nachschlagetabelle durch Identifizieren einer Korrelation unter einer Mehrzahl von Modellparametern in dem ersten Satz von Modellparametern, wobei die erste Nachschlagetabelle die Driftdistanz, die Modellunsicherheit und die eine oder die mehreren Modellleistungsmetriken speichert;

Berechnen (210), über den einen oder die mehreren Hardwareprozessoren (104), einer Driftverteilung einer Mehrzahl von eingehenden Testdaten, die vom Benutzer empfangen werden;

Identifizieren (212), über den einen oder die mehreren Hardwareprozessoren (104), einer Driftwertzelle aus der ersten Nachschlagetabelle, die der berechneten Driftverteilung der Mehrzahl von eingehenden Testdaten entspricht, wobei die Driftwertzelle basierend auf (i) einer Mindestabweichung zwischen der berechneten Driftverteilung der Mehrzahl von eingehenden Testdaten und einer Mehrzahl von vorgespeicherten Driftdistanzwerten in der ersten Nachschlagetabelle und (ii) einem Mindestwert der Modellunsicherheit identifiziert wird, wobei eine Zelle aus der ersten Nachschlagetabelle als die Driftwertzelle identifiziert wird, wenn die für einen benutzerspezifizierten eingehenden Datensatz berechnete Driftdistanz eine Mindestabweichung in Bezug auf den Driftdistanzwert aufweist, der in der entsprechenden Zelle der ersten Nachschlagetabelle vorhanden ist; und

Schätzen (214), über den einen oder die mehreren Hardwareprozessoren (104), mindestens einer der einen oder der mehreren Modellleistungsmetriken, die der identifizierten Driftwertzelle aus der ersten Nachschlagetabelle entsprechen, um eine optimale Leistung des zu bewertenden Modells zu bewerten *M,* wobei nächstbenachbarte zwei Driftwertzellen mit nachfolgenden höheren und niedrigeren Werten im Vergleich zur Driftwertzelle der ersten Nachschlagetabelle ausgewählt werden und die Driftwertzelle, die dem Mindestwert der Modellunsicherheit entspricht, als diejenige ausgewählt wird, die eine stabile Modellleistung darstellt.

2. Prozessorimplementiertes Verfahren (200) nach Anspruch 1, wobei der vordefinierte Schwellenwert konfigurierbar ist.

3. Prozessorimplementiertes Verfahren (200) nach Anspruch 1, wobei die eine oder die mehreren Modellleistungsmetriken eine Genauigkeit, einen F1-Score und eine durchschnittliche Präzession umfassen.

4. Prozessorimplementiertes Verfahren (200) nach Anspruch 1, wobei, wenn die Streuung in der Driftverteilung der Mehrzahl von Testdaten $D_{Test}$ unter dem vordefinierten Schwellenwert liegt, das Verfahren umfasst:

Stören des zweiten Datensatzes, um einen gestörten Datensatz unter Verwendung von Rauschstörungen zu erhalten, wobei die Rauschstörungen aus Gauß'schen, gleichförmigen oder Poisson-Verteilungen abgetastet und linear auf eine Mehrzahl von echten Abtastwerten des zweiten Datensatzes überlagert werden;

Bestimmen eines zweiten Satzes von Modellparametern für eine Mehrzahl von Datenproben, die in jedem Datenbucket aus einer Mehrzahl von Datenbuckets des gestörten Datensatzes enthalten sind, wobei der zweite Satz von Modellparametern einen angepassten Driftmittelwert, die Modellunsicherheit und die eine oder die mehreren Modellleistungsmetriken beinhaltet;

Konstruieren einer zweiten Nachschlagetabelle durch Identifizieren einer Korrelation unter jedem des zweiten Satzes von Modellparametern, wobei die zweite Nachschlagetabelle den angepassten Driftmittelwert, die Modellunsicherheit und die eine oder die mehreren Modellleistungsmetriken speichert;

Berechnen einer angepassten Driftmittelwertverteilung der Mehrzahl von eingehenden Testdaten, die vom Benutzer empfangen werden;

Identifizieren einer Driftwertzelle aus der zweiten Nachschlagetabelle, die der berechneten angepassten Driftmittelwertverteilung der Mehrzahl von eingehenden Testdaten entspricht, wobei die Driftwertzelle basierend auf (i) einer Mindestabweichung zwischen der berechneten angepassten Driftmittelwertverteilung der Mehrzahl von eingehenden Testdaten und einer Mehrzahl von vorgespeicherten angepassten Driftmittelwerten in der zweiten Nachschlagetabelle und (ii) einem Mindestwert der Modellunsicherheit identifiziert wird, wobei eine Zelle aus der zweiten Nachschlagetabelle als die Driftwertzelle identifiziert wird, wenn die für einen benutzerspezifizierten eingehenden Datensatz berechnete angepasste Driftmittelwertverteilung eine Mindestabweichung in Bezug auf den angepassten Driftmittelwertverteilungswert aufweist, der in der entsprechenden Zelle der zweiten Nachschlagetabelle vorhanden ist; und

Schätzen mindestens einer der einen oder der mehreren Modellleistungsmetriken, die der identifizierten Driftwertzelle aus der zweiten Nachschlagetabelle entsprechen, um eine optimale Leistung des zu bewertenden Modells M zu bewerten.

5. Prozessorimplementiertes Verfahren (200) nach Anspruch 1, wobei die optimale Leistung des zu bewertenden Modells $M$ bewertet wird, wenn das zu bewertende Modell M in der Produktion eingesetzt wird.

6. System (100) zum Schätzen und Bewerten der Leistung eines Modells in einer Produktionsumgebung, umfassend:

einen Speicher (102), der Anweisungen speichert;
eine oder mehrere Kommunikationsschnittstellen (106); und
einen oder mehrere Hardwareprozessoren (104), die über die eine oder die mehreren Kommunikationsschnittstellen (106) mit dem Speicher (102) gekoppelt sind, wobei der eine oder die mehreren Hardwareprozessoren (104) durch die Anweisungen konfiguriert sind zum:
Empfangen einer Mehrzahl von Testdaten $D_{Test}$ und eines zu bewertenden Modells $M$ als eine Eingabe von einem Benutzer, wobei das zu bewertende Modell ein auf künstlicher Intelligenz basierendes Modell oder ein auf maschinellem Lernen basierendes Modell ist, **dadurch gekennzeichnet, dass**:

Berechnen einer Driftverteilung der Mehrzahl von Testdaten $D_{Test}$ unter Verwendung eines oder mehrerer benutzerspezifizierter Driftberechnungsverfahren;
Vergleichen einer Streuung in der berechneten Driftverteilung der Mehrzahl von Testdaten $D_{Test}$ mit einem vordefinierten Schwellenwert;
Durchführen der Schritte (i) bis (iii), wenn die Streuung in der berechneten Driftverteilung der Mehrzahl von Testdaten $D_{Test}$ den vordefinierten Schwellenwert überschreitet:

(i) Partitionieren der Mehrzahl von Testdaten $D_{Test}$ in einen ersten Datensatz und einen zweiten Datensatz, wobei der zweite Datensatz in eine Mehrzahl von Datenbuckets unterteilt ist, wobei der erste Datensatz einen Referenzdatensatz angibt und als $x_{ref}$ bezeichnet wird und die Größe des Referenzdatensatzes $x_{ref}$ vom Benutzer abhängig von der Größe der Testdaten $D_{Test}$ spezifiziert wird und der zweite Datensatz einen verbleibenden Teil der Testdaten $D_{Test}$ angibt und durch $D_{Test} - x_{ref}$ bezeichnet wird und wobei der zweite Datensatz in eine Mehrzahl von Datenbuckets unterteilt ist, wobei die Datenbuckets zufällig mit einer benutzerdefinierten Probengröße ausgewählt werden,
(ii) Bestimmen eines ersten Satzes von Modellparametern für eine Mehrzahl von Datenproben, die in jedem Datenbucket aus der Mehrzahl von Datenbuckets enthalten sind, wobei der erste Satz von Modellparametern eine Driftdistanz, eine Modellunsicherheit und eine oder mehrere Modellleistungsmetriken beinhaltet, wobei die Driftdistanz unter Verwendung eines *berechnen_Drift*()-Moduls bestimmt wird, das die Drift jedes Datenbuckets unter Verwendung eines benutzerspezifizierten Driftbewertungsverfahrens bewertet, die Modellunsicherheit unter Verwendung eines *berechnen_uq*()-Moduls bestimmt wird, das die Modellunsicherheit jedes Datenbuckets unter Verwendung eines benutzerspezifizierten Driftbewertungsverfahrens bewertet, und die eine oder die mehreren Modellleistungsmetriken unter Verwendung eines *berechnen_mperf*()-Moduls bestimmt werden, und
(iii) Konstruieren einer ersten Nachschlagetabelle durch Identifizieren einer Korrelation unter einer Mehrzahl von Modellparametern in dem ersten Satz von Modellparametern, wobei die erste Nachschlagetabelle die Driftdistanz, die Modellunsicherheit und die eine oder die mehreren Modellleistungsmetriken speichert;

Berechnen einer Driftverteilung einer Mehrzahl von eingehenden Testdaten, die vom Benutzer empfangen werden;
Identifizieren einer Driftwertzelle aus der ersten Nachschlagetabelle, die der berechneten Driftverteilung der Mehrzahl von eingehenden Testdaten entspricht, wobei die Driftwertzelle basierend auf (i) einer Mindestabweichung zwischen der berechneten Driftverteilung der Mehrzahl von eingehenden Testdaten und einer Mehrzahl von vorgespeicherten Driftdistanzwerten in der ersten Nachschlagetabelle und (ii) einem Mindestwert der Modellunsicherheit identifiziert wird, wobei eine Zelle aus der ersten Nachschlagetabelle als die Driftwertzelle identifiziert wird, wenn die für einen benutzerspezifizierten eingehenden Datensatz berechnete Driftdistanz eine Mindestabweichung in Bezug auf den Driftdistanzwert aufweist, der in der entsprechenden Zelle der ersten Nachschlagetabelle vorhanden ist; und
Schätzen mindestens einer der einen oder der mehreren Modellleistungsmetriken, die der identifizierten Driftwertzelle aus der ersten Nachschlagetabelle entsprechen, um eine optimale Leistung des zu bewertenden Modells zu bewerten M, wobei nächstbenachbarte zwei Driftwertzellen mit nachfolgenden höheren und niedrigeren Werten im Vergleich zur Driftwertzelle der ersten Nachschlagetabelle ausgewählt werden und die Driftwertzelle, die dem Mindestwert der Modellunsicherheit entspricht, als diejenige ausgewählt wird, die eine stabile Modellleistung darstellt.

7. System nach Anspruch 6, wobei der vordefinierte Schwellenwert konfigurierbar ist.

8. System nach Anspruch 6, wobei die eine oder die mehreren Modellleistungsmetriken eine Genauigkeit, einen F1-Score und eine durchschnittliche Präzession umfassen.

9. System nach Anspruch 6, wobei, wenn die Streuung in der Driftverteilung der Mehrzahl von Testdaten $D_{Test}$ unter dem vordefinierten Schwellenwert liegt, das System ferner konfiguriert ist zum:

Stören des zweiten Datensatzes, um einen gestörten Datensatz unter Verwendung von Rauschstörungen zu erhalten, wobei die Rauschstörungen aus Gauß'schen, gleichförmigen oder Poisson-Verteilungen abgetastet und linear auf eine Mehrzahl von echten Abtastwerten des zweiten Datensatzes überlagert werden;

Bestimmen eines zweiten Satzes von Modellparametern für eine Mehrzahl von Datenproben, die in jedem Datenbucket aus einer Mehrzahl von Datenbuckets des gestörten Datensatzes enthalten sind, wobei der zweite Satz von Modellparametern einen angepassten Driftmittelwert, die Modellunsicherheit und die eine oder die mehreren Modellleistungsmetriken beinhaltet;

Konstruieren einer zweiten Nachschlagetabelle durch Identifizieren einer Korrelation unter jedem des zweiten Satzes von Modellparametern, wobei die zweite Nachschlagetabelle den angepassten Driftmittelwert, die Modellunsicherheit und die eine oder die mehreren Modellleistungsmetriken speichert;

Berechnen einer angepassten Driftmittelwertverteilung der Mehrzahl von eingehenden Testdaten, die vom Benutzer empfangen werden;

Identifizieren einer Driftwertzelle aus der zweiten Nachschlagetabelle, die der berechneten angepassten Driftmittelwertverteilung der Mehrzahl von eingehenden Testdaten entspricht, wobei die Driftwertzelle basierend auf (i) einer Mindestabweichung zwischen der berechneten angepassten Driftmittelwertverteilung der Mehrzahl von eingehenden Testdaten und einer Mehrzahl von vorgespeicherten angepassten Driftmittelwerten in der zweiten Nachschlagetabelle und (ii) einem Mindestwert der Modellunsicherheit identifiziert wird, wobei eine Zelle aus der zweiten Nachschlagetabelle als die Driftwertzelle identifiziert wird, wenn die für einen benutzerspezifizierten eingehenden Datensatz berechnete angepasste Driftmittelwertverteilung eine Mindestabweichung in Bezug auf den angepassten Driftmittelwertverteilungswert aufweist, der in der entsprechenden Zelle der zweiten Nachschlagetabelle vorhanden ist; und

Schätzen mindestens einer der einen oder der mehreren Modellleistungsmetriken, die der identifizierten Driftwertzelle aus der zweiten Nachschlagetabelle entsprechen, um eine optimale Leistung des zu bewertenden Modells $M$ zu bewerten.

10. System nach Anspruch 6, wobei die optimale Leistung des zu bewertenden Modells $M$ bewertet wird, wenn das zu bewertende Modell $M$ in der Produktion eingesetzt wird.

11. Ein oder mehrere nichtflüchtige computerlesbare Medien zum Schätzen und Bewerten der Leistung eines Modells in einer Produktionsumgebung, umfassend eine oder mehrere Anweisungen, die bei Ausführung durch einen oder mehrere Hardwareprozessoren Folgendes bewirken:
Empfangen einer Mehrzahl von Testdaten $D_{Test}$ und eines zu bewertenden Modells $M$ als eine Eingabe von einem Benutzer, wobei das zu bewertende Modell ein auf künstlicher Intelligenz basierendes Modell oder ein auf maschinellem Lernen basierendes Modell ist, **dadurch gekennzeichnet, dass**:

Berechnen einer Driftverteilung der Mehrzahl von Testdaten $D_{Test}$ unter Verwendung eines oder mehrerer benutzerspezifizierter Driftberechnungsverfahren;

Vergleichen einer Streuung in der berechneten Driftverteilung der Mehrzahl von Testdaten $D_{Test}$ mit einem vordefinierten Schwellenwert;

Durchführen, über den einen oder die mehreren Hardwareprozessoren, der Schritte (i) bis (iii), wenn die Streuung in der berechneten Driftverteilung der Mehrzahl von Testdaten $D_{Test}$ den vordefinierten Schwellenwert überschreitet:

(i) Partitionieren der Mehrzahl von Testdaten $D_{Test}$ in einen ersten Datensatz und einen zweiten Datensatz, wobei der zweite Datensatz in eine Mehrzahl von Datenbuckets unterteilt ist, wobei der erste Datensatz einen Referenzdatensatz angibt und als $x_{ref}$ bezeichnet wird und die Größe des Referenzdatensatzes $x_{ref}$ vom Benutzer abhängig von der Größe der Testdaten $D_{Test}$ spezifiziert wird und der zweite Datensatz einen verbleibenden Teil der Testdaten $T$ angibt und durch $D_{Test} - x_{ref}$ bezeichnet wird und wobei der zweite Datensatz in eine Mehrzahl von Datenbuckets unterteilt ist, wobei die Datenbuckets zufällig mit einer benutzerdefinierten Probengröße ausgewählt werden,

(ii) Bestimmen eines ersten Satzes von Modellparametern für eine Mehrzahl von Datenproben, die in jedem Datenbucket aus der Mehrzahl von Datenbuckets enthalten sind, wobei der erste Satz von Modellparametern eine Driftdistanz, eine Modellunsicherheit und eine oder mehrere Modellleistungsmetriken beinhaltet, wobei die Driftdistanz unter Verwendung eines *berechnen_Drift*()-Moduls bestimmt wird, das die Drift jedes Datenbuckets unter Verwendung eines benutzerspezifizierten Driftbewertungsverfahrens bewertet, die Modellunsicherheit unter Verwendung eines *berechnen_uq*()-Moduls bestimmt wird, das die Modellunsicherheit jedes Datenbuckets unter Verwendung eines benutzerspezifizierten Driftbewertungsverfahrens bewertet, und die eine oder die mehreren Modellleistungsmetriken unter Verwendung eines *berechnen_mperf*()-Moduls bestimmt werden, und

(iii) Konstruieren einer ersten Nachschlagetabelle durch Identifizieren einer Korrelation unter einer Mehrzahl von Modellparametern in dem ersten Satz von Modellparametern, wobei die erste Nachschlagetabelle die Driftdistanz, die Modellunsicherheit und die eine oder die mehreren Modellleistungsmetriken speichert;

Berechnen einer Driftverteilung einer Mehrzahl von eingehenden Testdaten, die vom Benutzer empfangen werden;

Identifizieren einer Driftwertzelle aus der ersten Nachschlagetabelle, die der berechneten Driftverteilung der Mehrzahl von eingehenden Testdaten entspricht, wobei die Driftwertzelle basierend auf (i) einer Mindestabweichung zwischen der berechneten Driftverteilung der Mehrzahl von eingehenden Testdaten und einer Mehrzahl von vorgespeicherten Driftdistanzwerten in der ersten Nachschlagetabelle und (ii) einem Mindestwert der Modellunsicherheit identifiziert wird, wobei eine Zelle aus der ersten Nachschlagetabelle als die Driftwertzelle identifiziert wird, wenn die für einen benutzerspezifizierten eingehenden Datensatz berechnete Driftdistanz eine Mindestabweichung in Bezug auf den Driftdistanzwert aufweist, der in der entsprechenden Zelle der ersten Nachschlagetabelle vorhanden ist; und

Schätzen mindestens einer der einen oder der mehreren Modellleistungsmetriken, die der identifizierten Driftwertzelle aus der ersten Nachschlagetabelle entsprechen, um eine optimale Leistung des zu bewertenden Modells zu bewerten $M$, wobei nächstbenachbarte zwei Driftwertzellen mit nachfolgenden höheren und niedrigeren Werten im Vergleich zur Driftwertzelle der ersten Nachschlagetabelle ausgewählt werden und die Driftwertzelle, die dem Mindestwert der Modellunsicherheit entspricht, als diejenige ausgewählt wird, die eine stabile Modellleistung darstellt.

**Revendications**

1. Procédé mis en œuvre par processeur (200) pour estimer et évaluer la performance d'un modèle dans un environnement de production, comprenant :

la réception (202), via un ou plusieurs processeurs matériels (104), d'une pluralité de données de test $D_{test}$ et d'un modèle en cours d'évaluation $M$ en tant qu'entrée d'un utilisateur, dans lequel le modèle en cours d'évaluation est un modèle basé sur l'intelligence artificielle ou un modèle basé sur l'apprentissage automatique, **caractérisé en ce que** :

le calcul (204), via les un ou plusieurs processeurs matériels (104), d'une distribution de dérive de la pluralité de données de test $D_{test}$ en utilisant un ou plusieurs procédés de calcul de dérive spécifiés par l'utilisateur ;

la comparaison (206), via les un ou plusieurs processeurs matériels (104), d'un étalement dans la distribution de dérive calculée de la pluralité de données de test $D_{test}$ avec un seuil prédéfini ;

la réalisation (208), via les un ou plusieurs processeurs matériels (104), des étapes (i) à (iii) lorsque l'étalement dans la distribution de dérive calculée de la pluralité de données de test $D_{test}$ dépasse le seuil prédéfini :

(i) le partitionnement, de la pluralité de données de test $D_{test}$ en un premier ensemble de données et un second ensemble de données, dans lequel le premier ensemble de données est indicatif d'un ensemble de données de référence et désigné par $x_{ref}$ et la taille de l'ensemble de données de référence $x_{ref}$ est spécifiée par l'utilisateur en fonction de la taille des données de test $D_{test}$, et le second ensemble de données est indicatif de la partie restante des données de test $D_{test}$ et désigné par $D_{test} - x_{ref}$ et dans lequel le second ensemble de données est divisé en une pluralité de compartiments de données, dans lequel compartiments de données sont choisis de manière aléatoire avec une taille d'échantillon définie par l'utilisateur,

(ii) la détermination, d'un premier ensemble de paramètres de modèle pour une pluralité d'échantillons de données compris dans chaque compartiment de données parmi la pluralité de compartiments de données,

dans lequel le premier ensemble de paramètres de modèle inclut une distance de dérive, une incertitude de modèle, et une ou plusieurs métriques de performance de modèle, dans lequel la distance de dérive est déterminée en utilisant un module *compute_drift*() qui évalue la dérive de chaque compartiment de données en utilisant tout procédé d'évaluation de dérive spécifié par l'utilisateur, l'incertitude de modèle est déterminée en utilisant un module *compute_uq*() qui évalue l'incertitude de modèle de chaque compartiment de données en utilisant un procédé d'évaluation de dérive spécifié par l'utilisateur et les une ou plusieurs métriques de performance de modèle sont déterminées en utilisant un module *compute_mperf*(), et
(iii) la construction, d'une première table de consultation en identifiant une corrélation parmi une pluralité de paramètres de modèle dans le premier ensemble de paramètres de modèle, dans lequel la première table de consultation stocke la distance de dérive, l'incertitude de modèle, et les une ou plusieurs métriques de performance de modèle ;

le calcul (210), via les un ou plusieurs processeurs matériels (104), d'une distribution de dérive d'une pluralité de données de test entrantes reçues de l'utilisateur ;
l'identification (212), via les un ou plusieurs processeurs matériels (104), d'une cellule de valeur de dérive de la première table de consultation, correspondant à la distribution de dérive calculée de la pluralité de données de test entrantes, dans lequel la cellule de valeur de dérive est identifiée sur la base (i) d'un écart minimal entre la distribution de dérive calculée de la pluralité de données de test entrantes et une pluralité de valeurs de distance de dérive pré-stockées dans la première table de consultation, et (ii) d'une valeur minimale d'incertitude de modèle, dans lequel une cellule de la première table de consultation est identifiée en tant que cellule de valeur de dérive si la distance de dérive calculée pour un ensemble de données entrantes spécifié par l'utilisateur présente un écart minimal par rapport à la valeur de distance de dérive présente dans la cellule correspondante de la première table de consultation ; et
l'estimation (214), via les un ou plusieurs processeurs matériels (104), d'au moins l'une des une ou plusieurs métriques de performance de modèle correspondant à la cellule de valeur de dérive identifiée de la première table de consultation pour évaluer une performance optimale du modèle en cours d'évaluation M, dans lequel deux cellules de valeur de dérive voisines les plus proches ayant des valeurs supérieures et inférieures ultérieures par rapport à la cellule de valeur de dérive de la première table de consultation sont choisies et la cellule de valeur de dérive correspondant à la valeur minimale d'incertitude de modèle est sélectionnée en tant que celle représentant une performance de modèle stable.

2. Procédé mis en œuvre par processeur (200) selon la revendication 1, dans lequel le seuil prédéfini est configurable.

3. Procédé mis en œuvre par processeur (200) selon la revendication 1, dans lequel les une ou plusieurs métriques de performance de modèle comprennent une précision, un score F1, et une précession moyenne.

4. Procédé mis en œuvre par processeur (200) selon la revendication 1, dans lequel lorsque l'étalement dans la distribution de dérive de la pluralité de données de test $D_{test}$ est inférieur au seuil prédéfini, le procédé comprenant :

la perturbation, du second ensemble de données pour obtenir un ensemble de données perturbé en utilisant des perturbations de bruit, dans lequel les perturbations de bruit sont échantillonnées à partir de distributions gaussiennes, uniformes ou de poisson et superposées linéairement au-dessus d'une pluralité d'échantillons réels du second ensemble de données ;
la détermination, d'un second ensemble de paramètres de modèle pour une pluralité d'échantillons de données compris dans chaque compartiment de données parmi une pluralité de compartiments de données de l'ensemble de données perturbé, dans lequel le second ensemble de paramètres de modèle inclut une moyenne de dérive ajustée, l'incertitude de modèle, et les une ou plusieurs métriques de performance de modèle ;
la construction, d'une seconde table de consultation en identifiant une corrélation parmi chacun du second ensemble de paramètres de modèle, dans lequel la seconde table de consultation stocke la moyenne de dérive ajustée, l'incertitude de modèle, et les une ou plusieurs métriques de performance de modèle ;
le calcul, d'une distribution de moyenne de dérive ajustée de la pluralité de données de test entrantes reçues de l'utilisateur ;
l'identification, d'une cellule de valeur de dérive de la seconde table de consultation correspondant à la distribution de moyenne de dérive ajustée calculée de la pluralité de données de test entrantes, dans lequel la cellule de valeur de dérive est identifiée sur la base (i) d'un écart minimal entre la distribution de moyenne de dérive ajustée calculée de la pluralité de données de test entrantes et une pluralité de valeurs de moyenne de dérive ajustée pré-stockées dans la seconde table de consultation et (ii) d'une valeur minimale d'incertitude de modèle, dans lequel une cellule de la seconde table de consultation est identifiée en tant que cellule de valeur de dérive si la distribution de moyenne de dérive ajustée calculée pour un ensemble de données entrantes spécifié par l'utilisateur présente un écart minimal par rapport à la valeur de distribution de moyenne de dérive ajustée présente dans la cellule correspondante de la seconde table de consultation ; et

l'estimation, d'au moins l'une des une ou plusieurs métriques de performance de modèle correspondant à la cellule de valeur de dérive identifiée de la seconde table de consultation pour évaluer une performance optimale du modèle sous évaluation M.

5. Procédé mis en œuvre par processeur (200) selon la revendication 1, dans lequel la performance optimale du modèle sous évaluation *M* est évaluée lorsque le modèle sous évaluation M est déployé en production.

6. Système (100) pour estimer et évaluer la performance d'un modèle dans un environnement de production, comprenant :

une mémoire (102) stockant des instructions ;
une ou plusieurs interfaces de communication (106) ; et
un ou plusieurs processeurs matériels (104) couplés à la mémoire (102) via les une ou plusieurs interfaces de communication (106), dans lequel les un ou plusieurs processeurs matériels (104) sont configurés par les instructions pour :
recevoir, une pluralité de données de test $D_{test}$ et un modèle en cours d'évaluation $M$ en tant qu'entrée d'un utilisateur, dans lequel le modèle en cours d'évaluation est un modèle basé sur l'intelligence artificielle ou un modèle basé sur l'apprentissage automatique, **caractérisé en ce que** :

calculer, une distribution de dérive de la pluralité de données de test $D_{test}$ en utilisant un ou plusieurs procédés de calcul de dérive spécifiés par l'utilisateur ;
comparer, un étalement dans la distribution de dérive calculée de la pluralité de données de test $D_{test}$ avec un seuil prédéfini ;
réaliser, les étapes (i) à (iii) lorsque l'étalement dans la distribution de dérive calculée de la pluralité de données de test $D_{test}$ dépasse le seuil prédéfini :

(i) le partitionnement, de la pluralité de données de test $D_{test}$ en un premier ensemble de données et un second ensemble de données, dans lequel le second ensemble de données est divisé en une pluralité de compartiments de données, dans lequel le premier ensemble de données est indicatif d'un ensemble de données de référence et désigné par $x_{ref}$ et la taille de l'ensemble de données de référence $x_{ref}$ est spécifiée par l'utilisateur en fonction de la taille des données de test $D_{test}$, et le second ensemble de données est indicatif de la partie restante des données de test $D_{test}$ et désigné par $D_{test}$ - $x_{ref}$ et dans lequel le second ensemble de données est divisé en une pluralité de compartiments de données, dans lequel
(ii) la détermination, d'un premier ensemble de paramètres de modèle pour une pluralité d'échantillons de données compris dans chaque compartiment de données parmi la pluralité de compartiments de données, dans lequel le premier ensemble de paramètres de modèle inclut une distance de dérive, une incertitude de modèle, et une ou plusieurs métriques de performance de modèle, dans lequel la distance de dérive est déterminée en utilisant un module *compute_drift*() qui évalue la dérive de chaque compartiment de données en utilisant tout procédé d'évaluation de dérive spécifié par l'utilisateur, l'incertitude de modèle est déterminée en utilisant un module *compute_uq*() qui évalue l'incertitude de modèle de chaque compartiment de données en utilisant un procédé d'évaluation de dérive spécifié par l'utilisateur et les une ou plusieurs métriques de performance de modèle sont déterminées en utilisant un module *compute_mperf*(), et
(iii) la construction, d'une première table de consultation en identifiant une corrélation parmi une pluralité de paramètres de modèle dans le premier ensemble de paramètres de modèle, dans lequel la première table de consultation stocke la distance de dérive, l'incertitude de modèle, et les une ou plusieurs métriques de performance de modèle ;

le calcul, d'une distribution de dérive d'une pluralité de données de test entrantes reçues de l'utilisateur ;
l'identification, d'une cellule de valeur de dérive de la première table de consultation correspondant à la distribution de dérive calculée de la pluralité de données de test entrantes, dans lequel la cellule de valeur de dérive est identifiée sur la base (i) d'un écart minimal entre la distribution de dérive calculée de la pluralité de données de test entrantes et une pluralité de valeurs de distance de dérive pré-stockées dans la première table de consultation, et (ii) d'une valeur minimale d'incertitude de modèle, dans lequel une cellule de la première table de consultation est identifiée en tant que cellule de valeur de dérive si la distance de dérive calculée pour un ensemble de données entrantes spécifié par l'utilisateur présente un écart minimal par rapport à la valeur de distance de dérive présente dans la cellule correspondante de la première table de consultation ; et

l'estimation, d'au moins l'une des une ou plusieurs métriques de performance de modèle correspondant à la cellule de valeur de dérive identifiée de la première table de consultation pour évaluer une performance optimale du modèle en cours d'évaluation $M$, dans lequel deux cellules de valeur de dérive voisines les plus proches ayant des valeurs supérieures et inférieures ultérieures par rapport à la cellule de valeur de dérive de la première table de consultation sont choisies et la cellule de valeur de dérive correspondant à la valeur minimale d'incertitude de modèle est sélectionnée en tant que celle représentant une performance de modèle stable.

7. Système selon la revendication 6, dans lequel le seuil prédéfini est configurable.

8. Système selon la revendication 6, dans lequel les une ou plusieurs métriques de performance de modèle comprennent une précision, un score F1, et une précession moyenne.

9. Système selon la revendication 6, dans lequel lorsque l'étalement dans la distribution de dérive de la pluralité de données de test $D_{test}$ est inférieur au seuil prédéfini est en outre configuré pour

perturber, le second ensemble de données pour obtenir un ensemble de données perturbé en utilisant des perturbations de bruit, dans lequel les perturbations de bruit sont échantillonnées à partir de distributions gaussiennes, uniformes ou de poisson et superposées linéairement au-dessus d'une pluralité d'échantillons réels du second ensemble de données ;

déterminer, un second ensemble de paramètres de modèle pour une pluralité d'échantillons de données compris dans chaque compartiment de données parmi une pluralité de compartiments de données de l'ensemble de données perturbé, dans lequel le second ensemble de paramètres de modèle inclut une moyenne de dérive ajustée, l'incertitude de modèle, et les une ou plusieurs métriques de performance de modèle ;

construire, une seconde table de consultation en identifiant une corrélation parmi chacun du second ensemble de paramètres de modèle, dans lequel la seconde table de consultation stocke la moyenne de dérive ajustée, l'incertitude de modèle, et les une ou plusieurs métriques de performance de modèle ;

calculer, une distribution de moyenne de dérive ajustée de la pluralité de données de test entrantes reçues de l'utilisateur ;

identifier, une cellule de valeur de dérive de la seconde table de consultation correspondant à la distribution de moyenne de dérive ajustée calculée de la pluralité de données de test entrantes, dans lequel la cellule de valeur de dérive est identifiée sur la base (i) d'un écart minimal entre la distribution de moyenne de dérive ajustée calculée de la pluralité de données de test entrantes et une pluralité de valeurs de moyenne de dérive ajustée préstockées dans la seconde table de consultation et (ii) d'une valeur minimale d'incertitude de modèle, dans lequel une cellule de la seconde table de consultation est identifiée en tant que cellule de valeur de dérive si la distribution de moyenne de dérive ajustée calculée pour un ensemble de données entrantes spécifié par l'utilisateur présente un écart minimal par rapport à la valeur de distribution de moyenne de dérive ajustée présente dans la cellule correspondante de la seconde table de consultation ; et

estimer, au moins l'une des une ou plusieurs métriques de performance de modèle correspondant à la cellule de valeur de dérive identifiée de la seconde table de consultation pour évaluer une performance optimale du modèle sous évaluation $M$.

10. Système selon la revendication 6, dans lequel la performance optimale du modèle sous évaluation $M$ est évaluée lorsque le modèle sous évaluation $M$ est déployé en production.

11. Un ou plusieurs supports lisibles par ordinateur non transitoires pour estimer et évaluer la performance d'un modèle dans un environnement de production, comprenant une ou plusieurs instructions qui, lorsqu'elles sont exécutées par un ou plusieurs processeurs matériels, amènent :
la réception, d'une pluralité de données de test $D_{test}$ et d'un modèle en cours d'évaluation M en tant qu'entrée d'un utilisateur, dans lequel le modèle en cours d'évaluation est un modèle basé sur l'intelligence artificielle ou un modèle basé sur l'apprentissage automatique, **caractérisé en ce que** :

le calcul, d'une distribution de dérive de la pluralité de données de test $D_{test}$ en utilisant un ou plusieurs procédés de calcul de dérive spécifiés par l'utilisateur ;

la comparaison, d'un étalement dans la distribution de dérive calculée de la pluralité de données de test $D_{test}$ avec un seuil prédéfini ;

la réalisation, via les un ou plusieurs processeurs matériels, des étapes (i) à (iii) lorsque l'étalement dans la distribution de dérive calculée de la pluralité de données de test $D_{test}$ dépasse le seuil prédéfini :

(i) le partitionnement, de la pluralité de données de test $D_{test}$ en un premier ensemble de données et un second ensemble de données, dans lequel le second ensemble de données est divisé en une pluralité de compartiments de données, dans lequel le premier ensemble de données est indicatif d'un ensemble de données de référence et désigné par $x_{ref}$ et la taille de l'ensemble de données de référence $x_{ref}$ est spécifiée par l'utilisateur en fonction de la taille des données de test $D_{test}$, et le second ensemble de données est indicatif de la partie restante des données de test $D_{test}$ et désigné par $D_{test}$ - $x_{ref}$ et dans lequel le second ensemble de données est divisé en une pluralité de compartiments de données, dans lequel les compartiments de données sont choisis de manière aléatoire avec une taille d'échantillon définie par l'utilisateur,

(ii) la détermination, d'un premier ensemble de paramètres de modèle pour une pluralité d'échantillons de données compris dans chaque compartiment de données parmi la pluralité de compartiments de données dans lequel le premier ensemble de paramètres de modèle inclut une distance de dérive, une incertitude de modèle, et une ou plusieurs métriques de performance de modèle dans lequel la distance de dérive est déterminée en utilisant un module *compute_drift*() qui évalue la dérive de chaque compartiment de données en utilisant tout procédé d'évaluation de dérive spécifié par l'utilisateur, l'incertitude de modèle est déterminée en utilisant un module *compute_uq*() qui évalue l'incertitude de modèle de chaque compartiment de données en utilisant un procédé d'évaluation de dérive spécifié par l'utilisateur et les une ou plusieurs métriques de performance de modèle sont déterminées en utilisant un module *compute_mperf*(), et

(iii) la construction, d'une première table de consultation en identifiant une corrélation parmi une pluralité de paramètres de modèle dans le premier ensemble de paramètres de modèle, dans lequel la première table de consultation stocke la distance de dérive, l'incertitude de modèle, et les une ou plusieurs métriques de performance de modèle ;

le calcul, d'une distribution de dérive d'une pluralité de données de test entrantes reçues de l'utilisateur ;

l'identification, d'une cellule de valeur de dérive de la première table de consultation, correspondant à la distribution de dérive calculée de la pluralité de données de test entrantes, dans lequel la cellule de valeur de dérive est identifiée sur la base (i) d'un écart minimal entre la distribution de dérive calculée de la pluralité de données de test entrantes et une pluralité de valeurs de distance de dérive pré-stockées dans la première table de consultation, et (ii) d'une valeur minimale d'incertitude de modèle dans lequel une cellule de la première table de consultation est identifiée en tant que cellule de valeur de dérive si la distance de dérive calculée pour un ensemble de données entrantes spécifié par l'utilisateur présente un écart minimal par rapport à la valeur de distance de dérive présente dans la cellule correspondante de la première table de consultation ; et

l'estimation, d'au moins l'une des une ou plusieurs métriques de performance de modèle correspondant à la cellule de valeur de dérive identifiée de la première table de consultation pour évaluer une performance optimale du modèle en cours d'évaluation M, dans lequel deux cellules de valeur de dérive voisines les plus proches ayant des valeurs supérieures et inférieures ultérieures par rapport à la cellule de valeur de dérive de la première table de consultation sont choisies et la cellule de valeur de dérive correspondant à la valeur minimale d'incertitude de modèle est sélectionnée en tant que celle représentant une performance de modèle stable.

System 100

Memory 102

Database 108

Hardware Processor(s) 104

Interface 106

**FIG. 1**

Receiving, (i) a plurality of test data $D_{test}$ and a model under evaluation $M$ as an input from a user. — 202

Computing, a drift distribution of the plurality of test data $D_{test}$ using one or more user specified drift computation methods — 204

Comparing, a spread in the computed drift distribution of the plurality of test data $D_{test}$ with a predefined threshold — 206

Performing, steps (i) through (iii) when the spread in the computed drift distribution of the plurality of test data $D_{test}$ exceeds the predefined threshold: (i) partitioning, the plurality of test data $D_{test}$ into a first dataset and a second dataset, wherein the second dataset is divided into a plurality of data buckets, (ii) determining, a first set of model parameters for a plurality of data samples comprised in each data bucket from the plurality of data buckets with respect to the first dataset, wherein the first set of model parameters include a drift distance, model uncertainty, and one or more model performance metrics and (iii) constructing, a first look up table by identifying a correlation among each of the first set of model parameters — 208

Computing, a drift distribution of a plurality of incoming test data received from the user — 210

Identifying, a drift value cell from the first look up table corresponding to the computed drift distribution of the plurality of incoming test data, wherein the drift value cell is identified based on (i) a minimum deviation between the computed drift distribution of the plurality of incoming test data and a plurality of pre-stored drift distance values in the first look up table and (ii) a minimum value of model uncertainty — 212

Estimating, at least one of the one or more model performance metrics corresponding to the identified drift value cell from the first look up table to evaluate an optimal performance of the model under evaluation $M$ — 214

200 

**FIG. 2**

**FIG. 3A**

**FIG. 3B**

**FIG. 4A**

**FIG. 4B**

**REFERENCES CITED IN THE DESCRIPTION**

**Patent documents cited in the description**

- IN 202221054354

- US 2021035021 A1

**Non-patent literature cited in the description**

- **LI BEIBIN et al.** *Warper: Efficiently Adapting Learned Cardinality Estimators to Data and Workload Drifts*

- **DAVID NIGENDA et al.** *Amazon SageMaker Model Monitor: A System for Real-Time Insights into Deployed Machine Learning Models*